# EUROPEAN PATENT SPECIFICATION

(11) **EP 2 368 688 B1**
(45) Date of publication and mention of the grant of the patent: **22.04.2020**
(21) Application number: 11002462.7
(22) Date of filing: 24.03.2011
(51) Int. Cl.: B29C 48/25, B29C 48/025

(54) **Method and apparatus for die change in extrusion moulding**
Verfahren und Vorrichtung zum Düsenwechsel beim Extrudieren
Procédé et dispositif de changement de la filière d'extrusion

(30) Priority: 26.03.2010 JP 2010072492
(43) Date of publication of application: 28.09.2011
(73) Proprietor: YKK Corporation, Tokyo 101-8642 (JP)
(72) Inventor: Matsuda, Koji, Kurobe-shi Toyama 938-8601 (JP); Makino, Seiji, Kurobe-shi Toyama 938-8601 (JP)
(74) Representative: Busch, Thomas

(56) References cited:
- DE-A1- 4 117 997
- FR-A1- 2 601 619
- JP-A- 10 193 431
- US-A1- 2003 052 427
- US-A1- 2006 145 389
- US-A1- 2006 157 887
- US-A1- 2007 003 658

## Description

### BACKGROUND

The present invention relates to an extrusion molding method of resin-molded articles, such as a resin material for a resin sash and a gasket for the attachment of glass, and a resin extrusion molding apparatus for implementing the method.

Various kinds of apparatuses which extrusion-mold resin-molded articles have been suggested.

For example, as disclosed in Patent Document 1, a resin extrusion-molding apparatus is suggested in which an extruder, an extrusion-molding die (die), a sizing device, a take-up machine, and a cutting machine are sequentially installed along an extrusion line.

An extrusion molding method using the aforementioned resin extrusion molding apparatus is adapted to pass the resin melted and kneaded in the extruder through the die, thereby continuously extrusion-molding a resin-molded article, cool and mold the extruded resin-molded article in the sizing device to solidify the article to a predetermined dimension and shape, take up the resin-molded article in the take-up device; and cut the resin-molded article into a predetermined length in the cutting machine. In a case where resin molded articles having different shapes are extrusion-molded, the resin extrusion molding apparatus is stopped if the extrusion molding of an old resin-molded article has ended, setting up of the resin extrusion molding apparatus is performed so that a new resin-molded article can be extrusion-molded, and then, the resin extrusion molding apparatus is operated to extrusion-mold a new resin-molded article having a different shape as described above.
[Patent Document 1] JP-A-9-117955

For the setup of the resin extrusion molding apparatus described above, there are a replacement task of detaching an old die and attaching a new die, cooling of the sizing device, a sizing die replacement task of detaching a sizing die for molding and attaching a new sizing die, a pad replacement task of detaching a pad of the take-up device and attaching a pad corresponding to the outer peripheral shape of a new resin-molded article, and the like.

Since the aforementioned individual replacement tasks is complicated and requires substantial time and effort, a long time is taken for the setup of the rein extrusion molding apparatus and the resin extrusion molding apparatus is paused for an extended period. Therefore, the efficiency of an extrusion molding task is poor.

In general, the aforementioned extruder melts, kneads, and compresses a charged resin material, extrudes the resin material toward a die, and passes the resin material through the die, thereby performing extrusion molding. Although there is no problem when the extruder is continuously operated, the resin within the extruder may deteriorate if the extruder is paused for a predetermined time or longer. Thus, when the extruder is operated again, the resin within the extruder should be removed.

If a long time is taken for the setup as mentioned above, the pause time of the extruder is long, and the resin within the extruder should be removed when the extruder is operated again. The task is troublesome, and the resin is wasted.

The aforementioned deterioration of the resin occurs strikingly in a case where the resin material is PVC resin.

US 2006/157887 A1, US 2006/145389 A1, and DE 4117997 A1 each disclose a resin extrusion molding apparatus and an extrusion molding method to operate the apparatus.

### SUMMARY

It is therefore an object of at least one embodiment of the present invention to provide a extrusion molding method of a resin-molded article which can shorten the pause time when resin-molded articles having different shapes are extrusion-molded, thereby improving the efficiency of the extrusion molding task and can perform extrusion molding without removing the resin within the extruder, and a resin extrusion molding apparatus for implementing the method.

In order to achieve the above-described object, according to an aspect of the embodiments of the present invention, there is provided an extrusion molding method, in accordance with claim 1 of a resin-molded article, using a resin extrusion molding apparatus including an extruder 1, a die 2, a sizing device 3, a take-up device 4 and a cutting machine 5, the extrusion molding method comprising: melting resin in the extruder 1; molding the melted resin through the die 2 to form the resin-molded article; forming the resin-molded article into a predetermined dimension and a predetermined shape in the sizing device 3; then taking up the resin-molded article in the take-up device 4; and then cutting the resin-molded article into a predetermined length in the cutting machine 5, wherein during the resin-molded article is extrusion-molded, a replacement die 2a is made to stand by at a standby position laterally adjacent to the die 2 attached to the extruder 1 and a replacement sizing unit 36 is made to stand by at a standby position laterally adjacent to a sizing unit 35 which coincides with an extrusion line a of the sizing device 3, wherein after the resin extrusion molding apparatus is stopped, the die 2 is detached from the extruder 1 and the replacement die 2a is moved to and attached to the extruder 1, thereby performing replacement of the die, and the sizing unit 35 is moved to a position laterally deviated from the extrusion line a and the replacement sizing unit 36 is moved to a position which coincides with the extrusion line a, thereby performing replacement of the sizing device 3, wherein upper and lower endless rotary bodies 41 of the take-up device 4 are laterally moved to make one of a plurality of supporting faces 40a of pads 40 coincide with the extrusion line a, thereby performing replacement of the take-up device 4, and wherein after the replacement of the die, the replacement of the sizing device 3 and the replacement of the take-up device 4 are completed, the resin extrusion molding apparatus is restarted to extrusion-mold a resin-molded article.

According to the extrusion molding method of a resin-molded article, the replacement of the die, the replacement of the sizing device 3, and the replacement of the take-up device 4 can be performed in a short time, respectively, and the setup which allows resin-molded articles having different shapes to be extrusion-molded can be performed in a short time. Therefore, the pause time of the resin extrusion molding apparatus can be shortened.

Accordingly, the efficiency of extrusion molding task of resin-molded articles can be improved, the extrusion molding can be performed without removing the resin within the extruder 1, and the resin is not wasted.

In the extrusion molding method, the die 2 attached the extruder 1 may be supported by a first die supporting member 22 and moved to a standby position together with the first die supporting member 22 and the replacement die 2a may be supported by a second die supporting member 23 and moved to the extruder 1 together with the second die supporting member 23.

With this configuration, the die 2 and the replacement die 2a can be moved by moving the first and second die supporting members 22 and 23. Therefore, the die replacement can be performed in a shorter time.

In the extrusion molding method, the sizing unit 35 and the replacement sizing unit 36 of the sizing device 3 may be laterally moved in conjunction with each other such that the replacement sizing unit 36 moves to the position which coincides with the extrusion line a when the sizing unit 35 moves to the position deviated from the extrusion line a.

With this configuration, replacement of the sizing device 3 can be performed in a shorter time.

In the extrusion molding method, when a height of the extrusion line a varies depending on a shape of a resin-molded article, the replacement sizing unit 36 may be vertically moved at the time of replacement of the sizing device 3 so as to match the height of the extrusion line a.

With this configuration, even if the height of the extrusion line a varies, the replacement sizing unit 36 can be matched to the height thereof.

According to another aspect of the embodiments of the present invention, there is provided a resin extrusion molding apparatus according to claim 5 comprising an extruder 1, a die 2, a sizing device 3, a take-up device 4 and a cutting machine 5 which are provided sequentially along an extrusion line a, wherein the resin extrusion molding apparatus is provided with a die replacing device 20 including a first die supporting member 22 which supports the die 2 and moves between an attachment position which faces the extruder 1 and one standby position, and a second die supporting member 23 which supports a replacement die 2a and moves between the attachment position and another standby position, wherein the sizing device 3 includes a frame 32 having a first unit attachment portion 33 and a second unit attachment portion 34 which are adjacent to each other in a lateral direction perpendicular to the extrusion line a, the frame 32 being laterally movable between a first position where the first unit attachment portion 33 coincides with the extrusion line a and a second position where the second unit attachment portion 34 coincides with the extrusion line a, wherein a sizing unit 35 is detachably attached to one of the first unit attachment portion 33 and the second unit attachment portion 34 and a replacement sizing unit 36 is detachably attached to the other of the first unit attachment portion 33 and the second unit attachment portion 34, wherein the take-up device 4 includes upper and lower endless rotary bodies 41 vertically facing each other and having pads 40 on outer peripheral surfaces thereof, and the pads 40 have a plurality of supporting faces 40a which support top face and bottom faces of resin-molded articles having different shapes, in the lateral direction, and wherein the upper and lower endless rotary bodies 41 are laterally movable such that one of the supporting faces 40a of the pads 40 coincides with the extrusion line a.

According to the resin extrusion molding apparatus, since the replacement die 2a can be moved along with the first die supporting member 22 and the second die supporting member 23, the die replacement task can be performed in a short time.

Additionally, by moving the frame 32 of the sizing device 3, the sizing unit 36 for replacement can be set to a position which coincides with the extrusion line a and the replacement of the sizing device 3 can be performed in a short time.

Additionally, by laterally moving the upper and lower endless rotary bodies 41 of the take-up device 4, the supporting faces 40a which sandwich the top face and bottom face of a resin-molded article to be extrusion-molded can be made to coincide with the extrusion line a, and the replacement of the take-up device 4 can be performed in a short time.

In the resin extrusion molding apparatus, the frame 32 of the sizing device 3 may be vertically movable.

With this configuration, when extrusion-molding resin-molded articles in which the height of the extrusion line a is different, the replacement sizing unit 36 can be vertically moved so as to be matched to the height of the extrusion line a.

### BRIEF DESCRIPTION OF THE DRAWINGS

In the accompanying drawings:
Fig. 1 is a plan view of a resin extrusion molding apparatus according to an embodiment of the present invention;
Fig. 2 is a side view of the resin extrusion molding apparatus according to the embodiment;
Fig. 3 is an enlarged view of a die replacing device taken along a line A-A in Fig. 1; and
Fig. 4 is an enlarged view of a take-up machine taken along a line B-B of Fig. 1.

### DETAILED DESCRIPTION OF THE EMBODIMENTS

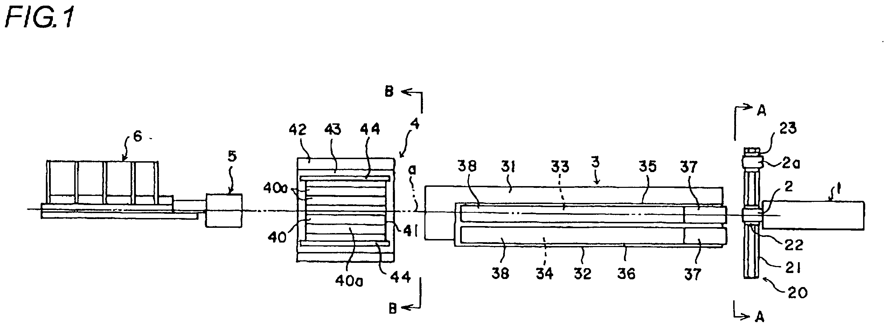

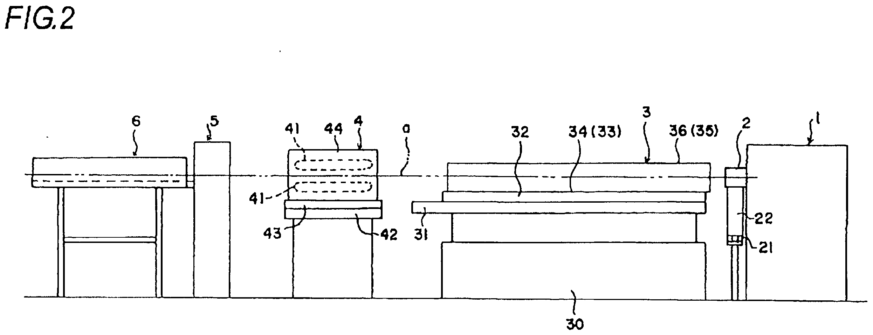

As shown in Figs. 1 and 2, an extruder 1, an extrusion molding die 2, a sizing device 3, a take-up device 4, a cutting machine 5, and a run-out table 6 are sequentially installed on a floor surface or the like along an extrusion line a.

These constitute the resin extrusion molding apparatus of the invention.

The extruder 1 melts, kneads, and compresses charged resin (powder) using a screw to extrude the resin toward a die 2, and passes through the die 2 to continuously extrusion-mold a resin-molded article.

The extrusion line a is a line which extends toward the cutting machine 4 from the extruder 1 on the same line as a resin-molded article to be extrusion-molded and which is obtained by expressing a position determined by the extruder 1 and the die 2 with an imaginary line.

The die 2 is detachably attached to a front portion of the extruder 1.

The die 2 is replaced as the die is moved to an attachment position where the die is attached to the extruder 1 by a die replacing device 20, and standby positions on both sides of this attachment position.

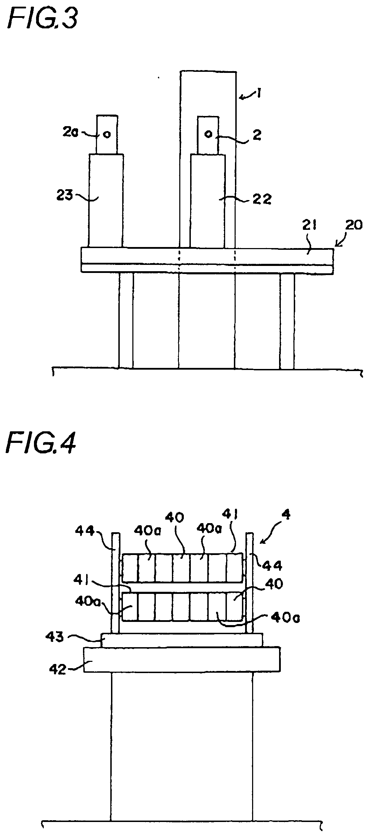

As shown in Fig. 3, the die replacing device 20 includes a guide portion 21 orthogonal to the extrusion line a, and a first die supporting member 22 and a second die supporting member 23 which move in a direction orthogonal to the extrusion line a along the guide portion 21, and the first die supporting member 22 moves between the aforementioned attachment position and one standby position along the guide portion 21. The second die supporting member 23 moves between the other standby position and the attachment position.

In the illustrated state, the die 2 is supported by the first die supporting member 22, the first die supporting member 22 is moved to the attachment position, and the die 2 is attached to the extruder 1. The attachment position is a position on the extrusion line a.

The second die supporting member 23 is moved to the other standby position, a replacement die 2a for a resin-molded article to be subsequently extrusion-molded is supported, and the replacement die 2a is made to stand by at a position adjacent to the aforementioned die 2.

It is preferable that the aforementioned first and second die supporting members 22 and 23 be manually moved.

The die replacement is performed as follows.

The die 2 is detached from the extruder 1, and is moved to one standby position along with the first die supporting member 22.

Simultaneously with this, the die 2 can be replaced by moving the second die supporting member 23, which supports the replacement die 2a, to the attachment position, and attaching the replacement die 2a supported by the second die supporting member 23 to the extruder 1.

Additionally, the next die replacement can be prepared by detaching the die 2 supported by the first die supporting member 22 at one standby position and supporting the replacement die 2a of a resin-molded article to be subsequently extrusion-molded, after the die replacement is performed as described above.

In the sizing device 3, a main frame 31 is attached to a main body 30 so as to be movable in a vertical direction, and a frame 32 is moved to the main frame 31 so as to be movable in a lateral direction. The lateral direction is a direction orthogonal to the extrusion line a on the horizontal plane.

The frame 32 includes a plurality of unit attachment portions, for example, a first unit attachment portion 33 and a second unit attachment portion 34 adjacent to the lateral direction. The frame 32 is movable to a first position where the first unit attachment portion 33 coincides with the extrusion line a and the second unit attachment portion 34 deviates laterally from the extrusion line a, and a second position where the second unit attachment portion 34 coincides with the extrusion line a and the first unit attachment portion 33 deviates laterally from the extrusion line a.

A sizing unit 35 and a sizing unit 36 for replacement can be detachably attached to the first and second unit attachment portions 33 and 34.

The individual sizing units 35 and 36 includes a sizing die 37 and a water tank 38, respectively.

In the sizing die 37, a resin-molded article extrusion-molded through the die 2 is inserted through a frame member having a predetermined shape of a hole, is cooled and molded in that state, and solidified with predetermined dimension and shape.

The water tank 38 further cools the aforementioned solidified resin-molded article to a normal temperature.

In the state shown in Fig. 1, the frame 32 is at the first position, the sizing unit 35 coincides with the extrusion line a, the sizing unit 35 is an actual sizing unit to be used for actual sizing, and the sizing unit 36 for replacement deviates from the extrusion line a. That is, provided is a space which is laterally adjacent to the sizing unit 35 in which the second unit attachment portion 34 coincides with the extrusion line a and to which the sizing unit for replacement of a resin-molded article to be subsequently extrusion-molded is attached and stand by.

Also, by laterally moving the frame 32 to the second position from the state shown in Fig. 1 and making the sizing unit 36 for replacement coincide with the extrusion line a, the sizing unit 36 for replacement becomes an actual sizing unit, and the sizing unit 35 deviates from the extrusion line a.

In short, when the first unit attachment portion 33 of the frame 32 has coincided with the extrusion line a, the second unit attachment portion 34 becomes a space to which a sizing unit for replacement is attached. When the second unit attachment portion 34 of the frame 32 has coincided with the extrusion line a, the first unit attachment portion 33 becomes a space to which a sizing unit for replacement is attached.

For this reason, the sizing unit can be replaced by moving the frame 32 laterally from the state shown in Fig. 1 and making the sizing unit 36 for replacement coincide with the extrusion line a.

Additionally, the replacement of the next sizing unit can be prepared by detaching the sizing unit 35 from the first unit attachment portion 33 and attaching to the first unit attachment portion 33 a sizing unit for replacement of a resin-molded article to be subsequently extrusion-molded, after the replacement is performed as described above.

In the sizing device 3 shown in Figs. 1 and 2, as the main frame 32 moves vertically, the sizing units 35 and 36 move vertically along with the frame 32, and the centers of the sizing units 35 and 36 varies vertically.

Accordingly, in a case where the height of the extrusion line a has varied depending on the shape of a extrusion-molded article, the vertical center of the sizing unit 36 for replacement can be made to match the height of the extrusion line a by moving the main frame 31 vertically. In addition, the frame 32 may be split into two such that each frame moves independently.

As shown in Figs. 1, 2, and 4, the take-up device 4 includes a pair of upper and lower endless rotary bodies 41 and 41 which have pads 40, respectively, and rotate in a direction along the extrusion line a. By rotating the upper and lower endless rotary bodies 41 and 41, a resin-molded article is taken up with its top face and bottom face sandwiched by the upper and lower pads 40, and is moved toward the cutting machine 5. The pads 40 extend in a direction (lateral direction) orthogonal to the rotational direction thereof, and are shorter in the rotational direction than the lateral direction, and the endless rotary body 41 is formed by coupling together a plurality of the pads 40 so as to have an endless shape.

Since the lateral width (i.e., the dimension in the direction orthogonal to the extrusion line a) of the upper and lower endless rotary bodies 41 and 41 is significantly greater than the lateral width of a resin-molded article, the lateral width (the dimension in a direction perpendicular to the extrusion line a on the horizontal plane) of the upper and lower pads 40 is significantly greater than the lateral width of the resin-molded article, and a plurality of supporting faces 40a is provided in the lateral width direction so that the top faces and bottom faces of resin-molded articles having different shapes can be supported by the supporting faces 40a.

A number of the supporting faces 40a are disposed corresponding to resin-molded articles. For this reason, the lateral width is large.

The upper and lower endless rotary bodies 41 and 41 are movable in the lateral direction (direction orthogonal to the extrusion line a), and are adapted so that any one supporting face 40a can coincide with the extrusion line a.

For example, a horizontal frame 43 is attached to a machine bed 42 so as to be laterally movable, a pair of vertical frames 44 is attached to the horizontal frame 43, and the upper and lower endless rotary bodies 41 and 41 are rotatably attached between the pair of vertical frames 44.

Thereby, the upper and lower endless rotary bodies 41 and 41 can be laterally moved by laterally moving the horizontal frame 43.

The take-up device 4 laterally moves the upper and lower endless rotary bodies 41 and 41 such that the supporting face 40a of the pad 40 corresponding to a resin-molded article to be extrusion-molded by the die 2 coincides with the extrusion line a, when the die 2 is replaced as described above.

The lateral movement is performed by an electric motor, and depending on molding information of a resin-molded article, control and movement are made so as to bring the supporting face 40a matched with the information.

The cutting machine 5 cuts a resin-molded article conveyed by the take-up device 4 into a predetermined length.

The run-out table 6 takes out a resin-molded article cut by the cutting machine 5 laterally.

Next, a method for extrusion-molding a resin-molded article will be described.

A resin-molded article is extrusion-molded in a state where the die 2 corresponding to the resin-molded article to be extrusion-molded is attached to the extruder 1, the sizing unit of the sizing device 3 coincides with the extrusion line a and any one supporting face 40a of the take-up device 4 coincides with the extrusion line a.

For example, the die 2 supported by the first die supporting member 22 of the die replacing device 20 is attached to the extruder 1, and the sizing unit 35 coincides with the extrusion line a with the frame 32 of the sizing device 3 as the first position.

When the extrusion molding is performed as described above, the replacement die 2a of a resin-molded article to be subsequently extrusion-molded is made to stand by at a standby position laterally adjacent to the die 2 attached to the aforementioned extruder 1, and the sizing unit 36 for replacement is made to stand by at a standby position laterally adjacent to the sizing unit (actual sizing unit) 35 which coincides with the aforementioned extrusion line a.

For example, the replacement die 2a is supported by the second die supporting member 23 of the die replacing device 20 and stand by, and the sizing unit 36 for replacement is attached to the second unit attachment portion 34 of the frame 32 of the sizing device 3 and stands by.

The replacement die 2a is preferably heated and stands by. By doing so, the time for heating and temperature rising after being attached to the extruder 1 can be shortened.

When the aforementioned extrusion molding of a resin-molded article has ended, the extruder 1, the sizing device 3, and the take-up device 4 are stopped to pause the resin extrusion molding apparatus.

In this state, the die 2 attached to the aforementioned extruder 1 is detached, and the replacement die 2a which is standing by is moved an attached to the extruder 1 for die replacement.

For example, the die 2 is detached from the extruder 1, is moved to one standby position along with the first die supporting member 22, and the second die supporting member 23 is moved to the attachment position where the replacement die 2a is attached to the extruder 1 for die replacement.

For this reason, the die replacement can be performed in a short time.

Particularly, if the die replacing device 20 is utilized as described above, the die 2 and the replacement die 2a can be moved by moving the first and second die supporting members 22 and 23 along the guide portion 21, and the movement of the dies is easy. Therefore, the die replacement can be performed in a shorter time.

When the resin extrusion molding apparatus is paused, the sizing device 3 which coincides with the extrusion line a is moved to a position where the sizing unit 35 has deviated from the extrusion line a, and the sizing unit 36 for replacement which is standing by is moved to a position where the sizing unit for replacement coincides with the extrusion line a, and replacement of the sizing device 3 is performed.

For example, by laterally moving the frame 32 of the sizing device 3 to the second position, the sizing unit 35 which coincides with the extrusion line a is brought into a position deviated from the extrusion line a, and simultaneously, the sizing unit 36 for replacement is brought into a position which coincides with the extrusion line a in an interlocking manner.

For this reason, replacement of the sizing device 3 can be performed in a short time.

Particularly, if the sizing unit can be replaced by moving one frame 32 as mentioned previously, replacement of the sizing device 3 can be performed in a shorter time.

The height of the extrusion line a may vary depending on the shape of a resin-molded article to be subsequently extrusion-molded. Thus, in that case, the main frame 31 of the sizing device 3 is vertically moved, and the sizing unit 36 for replacement is vertically moved to match the vertical center thereof with the height of the extrusion line a.

As described above, when the resin extrusion molding apparatus is paused, the upper and lower endless rotary bodies 41 and 41 of the take-up device 4 is laterally moved, and the supporting face 40a corresponding to a resin-molded article to be subsequently extrusion-molded is made to coincide with the extrusion line a.

Since replacement of the take-up device 4 can be performed by moving the upper and lower endless rotary bodies 41 in this way, and therefore can be performed in a short time.

As described above, when the die replacement, the replacement of the sizing device 3, and the replacement of the take-up device 4 have ended, driving of the extruder, the sizing device, and the take-up device 4 is started to extrusion-mold a resin-molded article.

As mentioned previously, since the time for the die replacement, the replacement of the sizing device 3, and the replacement of the take-up device 4, i.e., the time for setting up the resin extrusion molding apparatus, so that resin-molded articles having different shapes can be extrusion-molded, is short, the pause time of the resin extrusion molding apparatus is short, and the efficiency of resin extrusion molding task improves.

Moreover, since the resin does not deteriorate within the extruder 1, the subsequent extrusion molding can be started in a state where the resin at the time of the previous extrusion molding has been filled into the extruder 1.

Accordingly, the troublesome task of removing the resin within the extruder 1 becomes unnecessary, and since the resin within the extruder 1 can be utilized for continuous extrusion molding, the resin is not wasted.

## Claims

1. An extrusion molding method for a resin extrusion molding apparatus including an extruder (1), a die (2), a sizing device (3), a take-up device (4) and a cutting machine (5), the extrusion molding method comprising:
melting resin in the extruder;
molding the melted resin through the die to form the a resin-molded article;
forming the resin-molded article into a predetermined dimension and a predetermined shape in the sizing device; then
taking up the resin-molded article in the take-up device; and then
cutting the resin-molded article into a predetermined length in the cutting machine,
wherein while the resin-molded article is extrusion-molded, a replacement die for forming a subsequent resin-molded article to be subsequently extrusion-molded is made to stand by at a standby position laterally adjacent to the die attached to the extruder and a replacement sizing unit (36) for sizing the subsequent resin-molded article to be subsequently extrusion-molded into a shape which is different from the predetermined shape is made to stand by at a standby position laterally adjacent to a sizing unit which coincides with an extrusion line of the sizing device,
wherein after the resin extrusion molding apparatus is stopped, the die is detached from the extruder and the replacement die is moved to and attached to the extruder, thereby performing replacement of the die, and the sizing unit is moved to a position laterally deviated from the extrusion line and the replacement sizing unit is moved to a position which coincides with the extrusion line, thereby performing replacement of the sizing device,
**characterized in that**
the take-up device (4) comprises:
a machine bed (42);
a horizontal frame (43) attached laterally movable to the machine bed (42);
a pair of vertical frames (44, 44) fixed to the horizontal frame;
a pair of upper and lower endless rotary bodies (41, 41) rotatably attached between the pair of vertical frame; and
a pair of upper and lower pads (40, 40) disposed in the pair of upper and lower endless rotary bodies, respectively,
the upper pads have a plurality of upper supporting faces (40a) arranged in a lateral width direction perpendicular to the extrusion line and the lower pads have a plurality of lower supporting faces (40a) arranged in the lateral width direction,
the upper supporting faces and the lower supporting faces are configured to support top and bottom faces of the resin-molded article and the subsequent resin-molded article to be subsequently extrusion-molded,
after the resin extrusion molding apparatus is stopped, the horizontal frame (43) is laterally moved relative to the machine bed (42) to laterally move the upper supporting faces (40a) and the lower supporting faces (40a) such that the supporting face (40a) of the pads (40) corresponding to the subsequent resin-molded article to be subsequently extrusion-molded coincides with the extrusion line, thereby performing replacement of the take-up device (4), and
after the replacement of the die, the replacement of the sizing device and the replacement of the take-up device are completed, the resin extrusion molding apparatus is restarted to extrusion-mold the subsequent resin-molded article.

2. The extrusion molding method as set forth in claim 1, wherein the die attached to the extruder is supported by a first die supporting member and moved to a standby position together with the first die supporting member and the replacement die is supported by a second die supporting member and moved to the extruder together with the second die supporting member.

3. The extrusion molding method as set forth in claim 1, wherein the sizing unit and the replacement sizing unit of the sizing device are laterally moved in conjunction with each other such that the replacement sizing unit moves to the position which coincides with the extrusion line when the sizing unit moves to the position deviated from the extrusion line.

4. The extrusion molding method as set forth in claim 1, wherein when a height of the extrusion line varies depending on a shape of a resin-molded article, the replacement sizing unit is vertically moved at the time of replacement of the sizing device so as to match the height of the extrusion line.

5. A resin extrusion molding apparatus comprising an extruder (1), a die (2) which is configured to form a resin-molded article, a sizing device (3), a take-up device (4) and a cutting machine (5) which are provided sequentially along an extrusion line,
wherein the resin extrusion molding apparatus is provided with a die replacing device including a first die supporting member which supports the die and moves between an attachment position which faces the extruder and one standby position, and a second die supporting member which supports a replacement die which is configured to form a subsequent resin-molded article to be subsequently extrusion-molded and moves between the attachment position and another standby position,
wherein the sizing device includes a frame having a first unit attachment portion and a second unit attachment portion which are adjacent to each other in a lateral width direction perpendicular to the extrusion line, the frame being laterally movable between a first position where the first unit attachment portion coincides with the extrusion line and a second position where the second unit attachment portion coincides with the extrusion line,
wherein a sizing unit (35) which is configured to form the resin-molded article into a predetermined shape is detachably attached to one of the first unit attachment portion and the second unit attachment portion and a replacement sizing unit (36) which is configured to form the subsequent resin-molded article to be subsequently extrusion-molded into a shape which is different from the predetermined shape is detachably attached to the other of the first unit attachment portion and the second unit attachment portion,
**characterized in that**
the take-up device comprises:
a machine bed (42);
a horizontal frame (43) attached laterally movable to the machine bed (42); and
a pair of vertical frames (44, 44) fixed to the horizontal frame,
a pair of upper and lower endless rotary bodies (41, 41) rotatably attached between the pair of vertical frame; and
a pair of upper and lower pads (40, 40) disposed in the pair of upper and lower endless rotary bodies, respectively,
the upper pads have a plurality of upper supporting faces (40a) arranged in the lateral width direction and the lower pads have a plurality of lower supporting faces (40a) arranged in the lateral width direction,
the upper supporting faces and the lower supporting faces are configured to support top and bottom faces of the resin-molded article and the subsequent resin-molded article to be subsequently extrusion-molded, and
the horizontal frame are laterally movable relative to the machine bed such that the supporting face (40a) of the pads (40) corresponding to the subsequent resin-molded article to be subsequently extrusion-molded coincides with the extrusion line.

6. The resin extrusion molding apparatus as set forth in claim 5, wherein the frame of the sizing device is vertically movable.

7. The extrusion molding method as set forth in claim 1, wherein the replacement of the take-up device is performed by an electric motor depending on molding information of a resin-molded article to be extrusion-molded in the resin extrusion molding apparatus so that one of the upper supporting faces and one of the lower supporting faces which match with the molding information are made coincide with the extrusion line.

## Patentansprüche

1. Extrusionsformverfahren für eine Harzextrusionsformvorrichtung mit einem Extruder (1), einer Düse (2), einer Kalibriervorrichtung (3), einer Aufnahmevorrichtung (4) und einer Schneidemaschine (5), wobei das Extrusionsformverfahren Folgendes umfasst:
Schmelzen von Harz in dem Extruder;
Formen des geschmolzenen Harzes durch die Düse, um einen Harzformkörper zu bilden;
Herstellen des Harzformkörpers in einer vorbestimmten Abmessung und einer vorbestimmten Form in der Kalibriervorrichtung; dann
Aufnehmen des Harzformkörpers in der Aufnahmevorrichtung; und dann
Schneiden des Harzformkörpers auf eine vorbestimmte Länge in der Schneidemaschine,
wobei, während der Harzformkörper extrusionsgeformt wird, eine Ersatzdüse zum Herstellen eines nachfolgenden Harzformkörpers, der nachfolgend extrusionsgeformt werden soll, in einer Bereitschaftsposition seitlich neben der Düse, die an dem Extruder angebracht ist, bereitgehalten wird, und eine Ersatz-Kalibriereinheit (36) zum Kalibrieren des nachfolgenden Harzformkörpers, der nachfolgend zu einer Form extrusionsgeformt werden soll, die sich von der vorgegebenen Form unterscheidet, in einer Bereitschaftsposition seitlich neben einer Kalibriereinheit, die mit einer Extrusionslinie der Kalibriervorrichtung zusammenfällt, bereitgehalten wird,
wobei nach dem Stoppen der Harzextrusionsformvorrichtung die Düse von dem Extruder abgenommen und die Ersatzdüse zu dem Extruder bewegt und an diesem befestigt wird, wodurch ein Austausch der Düse durchgeführt wird, und die Kalibriereinheit in eine Position bewegt wird, die seitlich von der Extrusionslinie abweicht, und die Ersatz-Kalibriervorrichtung in eine Position bewegt wird, die mit der Extrusionslinie zusammenfällt, wodurch ein Austausch der Kalibriervorrichtung durchgeführt wird,
**dadurch gekennzeichnet, dass**
die Aufnahmevorrichtung (4) Folgendes umfasst:
ein Maschinenbett (42);
einen horizontalen Rahmen (43), der seitlich beweglich an dem Maschinenbett (42) angebracht ist;
ein Paar von vertikalen Rahmen (44, 44), die an dem horizontalen Rahmen befestigt sind;
ein Paar von oberen und unteren endlosen Drehkörpern (41, 41), die drehbar zwischen dem Paar von vertikalen Rahmen angebracht sind; und
ein Paar von oberen und unteren Beläge (40, 40), die in dem Paar von oberen und unteren endlosen Drehkörpern angeordnet sind,
die oberen Beläge eine Vielzahl von oberen Stützflächen (40a) aufweisen, die in einer seitlichen Breitenrichtung senkrecht zu der Extrusionslinie angeordnet sind, und die unteren Beläge eine Vielzahl von unteren Stützflächen (40a) aufweisen, die in der seitlichen Breitenrichtung angeordnet sind,
die oberen Stützflächen und die unteren Stützflächen so konfiguriert sind, dass sie die oberen und unteren Flächen des Harzformkörpers und des nachfolgenden Harzformkörpers, der nachfolgend extrusionsgeformt werden soll, tragen,
nach dem Stoppen der Harzextrusionsformvorrichtung der horizontale Rahmen (43) in Bezug auf das Maschinenbett (42) seitlich bewegt wird, um die oberen Stützflächen (40a) und die unteren Stützflächen (40a) seitlich zu bewegen, so dass die Stützfläche (40a) der Beläge (40), die dem nachfolgenden Harzformkörper, der nachfolgend extrusionsgeformt werden soll, entspricht, mit der Extrusionslinie zusammenfällt, wodurch ein Austausch der Aufnahmevorrichtung (4) durchgeführt wird, und
nachdem der Austausch der Düse, der Austausch der Kalibriervorrichtung und der Austausch der Aufnahmevorrichtung abgeschlossen sind, die Harzextrusionsformvorrichtung erneut gestartet wird, um den nachfolgenden Harzformkörper zu extrusionsformen.

2. Extrusionsformverfahren nach Anspruch 1, wobei die an dem Extruder angebrachte Düse von einem ersten Düsenträgerelement getragen und zusammen mit dem ersten Düsenträgerelement in eine Bereitschaftsposition bewegt wird, und die Ersatzdüse von einem zweiten Düsenträgerelement getragen und zusammen mit dem zweiten Düsenträgerelement zu dem Extruder bewegt wird.

3. Extrusionsformverfahren nach Anspruch 1, wobei die Kalibriereinheit und die Ersatz-Kalibriereinheit der Kalibriervorrichtung seitlich in Verbindung miteinander bewegt werden, so dass sich die Ersatz- Kalibriereinheit in die Position bewegt, die mit der Extrusionslinie zusammenfällt, wenn die Kalibriereinheit sich zu der Position bewegt, die von der Extrusionslinie abweicht.

4. Extrusionsformverfahren nach Anspruch 1, wobei, wenn eine Höhe der Extrusionslinie in Abhängigkeit von einer Form eines Harzformkörpers variiert, die Ersatz-Kalibriereinheit zum Zeitpunkt des Austauschs der Kalibriervorrichtung vertikal bewegt wird, um die Höhe der Extrusionslinie anzupassen.

5. Harzextrusionsformvorrichtung umfassend einen Extruder (1), eine Düse (2), die dazu konfiguriert ist, einen Harzformkörper herzustellen, eine Kalibriervorrichtung (3), eine Aufnahmevorrichtung (4) und eine Schneidemaschine (5), die nacheinander entlang einer Extrusionslinie vorgesehen sind,
wobei die Harzextrusionsformvorrichtung mit einer Düsenaustauschvorrichtung versehen ist, die ein erstes Düsenträgerelement enthält, das die Düse trägt und sich zwischen einer Befestigungsposition, die dem Extruder zugewandt ist, und einer Bereitschaftsposition bewegt, und ein zweites Düsenträgerelement enthält, das eine Ersatzdüse trägt, die dazu konfiguriert ist, einen nachfolgenden Harzformkörper herzustellen, der nachfolgend extrusionsgeformt werden soll, und die sich zwischen der Befestigungsposition und einer anderen Bereitschaftsposition bewegt,
wobei die Kalibriervorrichtung einen Rahmen mit einem ersten Einheitsanbringungsabschnitt und einem zweiten Einheitsanbringungsabschnitt umfasst, die in einer seitlichen Breitenrichtung senkrecht zu der Extrusionslinie aneinander angrenzen, wobei der Rahmen zwischen einer ersten Position, in der der erste Einheitsanbringungsabschnitt mit der Extrusionslinie zusammenfällt, und einer zweiten Position, in der der zweite Einheitsanbringungsabschnitt mit der Extrusionslinie zusammenfällt, seitlich beweglich ist,
wobei eine Kalibriereinheit (35), die dazu konfiguriert ist, den Harzformkörper in einer vorbestimmte Form herzustellen, abnehmbar an einem aus dem ersten Einheitsanbringungsabschnitt und dem zweiten Einheitsanbringungsabschnitt angebracht ist, und eine Ersatz-Kalibriereinheit (36), die dazu konfiguriert ist, den nachfolgenden Harzformkörper herzustellen, der nachfolgend in eine Form extrusionsgeformt werden soll, die sich von der vorbestimmten Form unterscheidet, abnehmbar an dem anderen aus dem ersten Einheitsanbringungsabschnitt und dem zweiten Einheitsanbringungsabschnitt angebracht ist,
**dadurch gekennzeichnet, dass**
die Aufnahmevorrichtung Folgendes umfasst:
ein Maschinenbett (42);
einen horizontalen Rahmen (43), der seitlich beweglich an dem Maschinenbett (42) angebracht ist;
ein Paar von vertikalen Rahmen (44, 44), die an dem horizontalen Rahmen befestigt sind;
ein Paar von oberen und unteren endlosen Drehkörpern (41, 41), die drehbar zwischen dem Paar von vertikalen Rahmen angebracht sind; und
ein Paar von oberen und unteren Belägen (40, 40), die in dem Paar von oberen und unteren endlosen Drehkörpern angeordnet sind,
die oberen Beläge eine Vielzahl von oberen Stützflächen (40a) aufweisen, die in der seitlichen Breitenrichtung angeordnet sind, und die unteren Beläge eine Vielzahl von unteren Stützflächen (40a) aufweisen, die in der seitlichen Breitenrichtung angeordnet sind,
die oberen Stützflächen und die unteren Stützflächen so konfiguriert sind, dass sie die oberen und unteren Flächen des Harzformkörpers und des nachfolgenden Harzformkörpers, der nachfolgend extrusionsgeformt werden soll, tragen, und
der horizontale Rahmen in Bezug auf das Maschinenbett seitlich beweglich ist, so dass die Stützfläche (40a) der Beläge (40), die dem nachfolgenden Harzformkörper entsprechen, der nachfolgend extrusionsgeformt werden soll, mit der Extrusionslinie zusammenfällt.

6. Harzextrusionsformvorrichtung nach Anspruch 5, wobei der Rahmen der Kalibriervorrichtung vertikal beweglich ist.

7. Extrusionsformverfahren nach Anspruch 1, wobei der Austausch der Aufnahmevorrichtung durch einen Elektromotor in Abhängigkeit von Forminformationen eines Harzformkörpers, der in der Harzextrusionsformvorrichtung extrusionsgeformt werden soll, durchgeführt wird, so dass eine der oberen Stützflächen und eine der unteren Stützflächen, die mit den Forminformationen übereinstimmen, mit der Extrusionslinie zusammenfallen.

## Revendications

1. Procédé de moulage par extrusion pour un appareil de moulage de résine par extrusion, comprenant une extrudeuse (1), une filière (2), un calibreur (3), un dispositif de réception (4) et une machine à couper (5), le procédé de moulage par extrusion comprenant :
la fusion d'une résine dans l'extrudeuse,
le moulage de la résine en fusion au travers de la filière pour former l'article moulé en résine,
la formation de l'article moulé en résine selon une dimension prédéterminée et une forme prédéterminée dans le calibreur, puis
la réception de l'article moulé en résine dans le dispositif de réception, puis le découpage de l'article moulé en résine selon une longueur prédéterminée dans la machine à couper ; et
dans lequel, pendant que l'article moulé en résine est moulé par extrusion, une filière de remplacement destinée à former un article en résine subséquent qui sera moulé lors d'une extrusion subséquente est mise en attente en un emplacement d'attente latéralement adjacent à la filière fixée sur l'extrudeuse, et une unité de calibrage de remplacement (36) destinée à calibrer l'article en résine subséquent qui sera moulé lors d'une extrusion subséquente selon une forme différente de la forme prédéterminée est mise en attente en un emplacement d'attente latéralement adjacent à une unité de calibrage qui coïncide avec une ligne d'extrusion du calibreur, et
dans lequel, après que l'appareil de moulage de résine par extrusion s'est arrêté, la filière est retirée de l'extrudeuse et la filière de remplacement est rapprochée de l'extrudeuse et fixée sur celle-ci, effectuant ainsi le remplacement de la filière, et l'unité de calibrage est amenée à un emplacement déporté latéralement de la ligne d'extrusion, et l'unité de calibrage de remplacement est amenée à un emplacement qui coïncide avec la ligne d'extrusion, effectuant ainsi le remplacement du calibreur,
**caractérisé en ce que**
le dispositif de réception (4) comprend :
un banc machine (42),
un bâti horizontal (43) fixé latéralement mobile au banc machine (42),
une paire de bâtis verticaux (44, 44) fixés au bâti horizontal,
une paire de corps rotatifs sans fin supérieur et inférieur (41, 41) fixés rotatifs entre la paire de bâtis verticaux, et
une paire de garnitures supérieures et inférieures (40, 40) respectivement disposées dans la paire de corps rotatifs sans fin supérieur et inférieur ;
les garnitures supérieures présentent une pluralité de faces de support supérieures (40a) agencées latéralement dans le sens de la largeur perpendiculairement à la ligne d'extrusion et les garnitures inférieures présentent une pluralité de faces de support inférieures (40a) agencées latéralement dans le sens de la largeur,
les faces de support supérieures et les faces de support inférieures sont conçues pour supporter les faces supérieure et inférieure de l'article moulé en résine et de l'article en résine subséquent qui sera moulé lors d'une extrusion subséquente,
après que l'appareil de moulage de résine par extrusion s'est arrêté, le bâti horizontal (43) est déplacé latéralement par rapport au banc machine (42) pour déplacer latéralement les faces de support supérieures (40a) et les faces de support inférieures (40a) de manière que la face de support (40a) des garnitures (40) correspondant à l'article en résine subséquent qui sera moulé lors d'une extrusion subséquente coïncide avec la ligne d'extrusion, effectuant ainsi le remplacement du dispositif de réception (4), et
après réalisation du remplacement de la filière, du remplacement du calibreur et du remplacement du dispositif de réception, l'appareil de moulage de résine par extrusion est redémarré pour effectuer le moulage par extrusion de l'article moulé en résine subséquent.

2. Procédé de moulage par extrusion selon la revendication 1, dans lequel la filière fixée sur l'extrudeuse est supportée par un premier élément de support de filière et amenée à un emplacement d'attente conjointement au premier élément de support de filière et la filière de remplacement est supportée par un deuxième élément de support de filière et amenée à l'extrudeuse conjointement au deuxième élément de support de filière.

3. Procédé de moulage par extrusion selon la revendication 1, dans lequel l'unité de calibrage et l'unité de calibrage de remplacement du calibreur sont déplacées latéralement conjointement l'une et l'autre de manière que l'unité de calibrage de remplacement est amenée à l'emplacement qui coïncide avec la ligne d'extrusion lorsque l'unité de calibrage est amenée à l'emplacement déporté de la ligne d'extrusion.

4. Procédé de moulage par extrusion selon la revendication 1, dans lequel, lorsque la hauteur de la ligne d'extrusion varie en fonction de la forme de l'article moulé en résine, l'unité de calibrage de remplacement est déplacée verticalement au moment du remplacement du calibreur de façon à correspondre à la hauteur de la ligne d'extrusion.

5. Appareil de moulage de résine par extrusion comprenant une extrudeuse (1), une filière (2) conçue pour former un article moulé en résine, un calibreur (3), un dispositif de réception (4) et une machine à couper (5), disposés successivement le long d'une ligne d'extrusion,
dans lequel l'appareil de moulage de résine par extrusion est doté d'un dispositif de remplacement de filière comprenant un premier élément de support de filière qui supporte la filière et est mobile entre un emplacement de fixation faisant face à l'extrudeuse et un emplacement d'attente, et un deuxième élément de support de filière qui supporte une filière de remplacement conçue pour former un article en résine subséquent qui sera moulé lors d'une extrusion subséquente et est mobile entre l'emplacement de fixation et un autre emplacement d'attente,
dans lequel le calibreur comprend un bâti présentant une première partie de fixation d'unité et une deuxième partie de fixation d'unité adjacentes l'une à l'autre latéralement dans le sens de la largeur, perpendiculairement à la ligne d'extrusion, le bâti étant latéralement mobile entre un premier emplacement où la première partie de fixation d'unité coïncide avec la ligne d'extrusion et un deuxième emplacement où la deuxième partie de fixation d'unité coïncide avec la ligne d'extrusion,
dans lequel une unité de calibrage (35) conçue pour former l'article moulé en résine selon une forme prédéterminée est fixée de manière amovible sur une des parties parmi la première partie de fixation d'unité et la deuxième partie de fixation d'unité, et une unité de calibrage de remplacement (36) conçue pour former l'article en résine subséquent qui sera moulé lors d'une extrusion subséquente selon une forme différente de la forme prédéterminée est fixée de manière amovible sur l'autre des parties parmi la première partie de fixation d'unité et la deuxième partie de fixation d'unité,
**caractérisé en ce que**
le dispositif de réception comprend :
un banc machine (42),
un bâti horizontal (43) fixé latéralement mobile au banc machine (42), et
une paire de bâtis verticaux (44, 44) fixés au bâti horizontal,
une paire de corps rotatifs sans fin supérieur et inférieur (41, 41) fixés rotatifs entre la paire de bâtis verticaux ; et
une paire de garnitures supérieures et inférieures (40, 40) respectivement disposées dans la paire de corps rotatifs sans fin supérieur et inférieur,
les garnitures supérieures présentent une pluralité de faces de support supérieures (40a) agencées latéralement dans le sens de la largeur et les garnitures inférieures présentent une pluralité de faces de support inférieures (40a) agencées latéralement dans le sens de la largeur,
les faces de support supérieures et les faces de support inférieures sont conçues pour supporter les faces supérieure et inférieure de l'article moulé en résine et de l'article en résine subséquent qui sera moulé lors d'une extrusion subséquente, et
le bâti horizontal est déplacé latéralement par rapport au banc machine de manière que la face de support (40a) des garnitures (40) correspondant à l'article en résine subséquent qui sera moulé lors d'une extrusion subséquente coïncide avec la ligne d'extrusion.

6. Appareil de moulage de résine par extrusion selon la revendication 5, dans lequel le bâti du calibreur est mobile verticalement.

7. Procédé de moulage par extrusion selon la revendication 1, dans lequel le remplacement du dispositif de réception s'effectue au moyen d'un moteur électrique en fonction d'informations de moulage concernant un article moulé en résine destiné à être moulé par extrusion dans l'appareil de moulage de résine par extrusion de manière qu'une des faces de support supérieures et une des faces de support inférieures qui correspondent aux informations de moulage soient amenées à coïncider avec la ligne d'extrusion.
